(19) Europäisches Patentamt
European Patent Office
Office européen des brevets

(11) EP 2 265 122 B1

# (12) EUROPEAN PATENT SPECIFICATION

(45) Date of publication and mention of the grant of the patent:
**18.03.2015 Bulletin 2015/12**

(21) Application number: **08864385.3**

(22) Date of filing: **16.12.2008**

(51) Int Cl.:
***A01N 43/653*** *(2006.01)* ***A01N 37/46*** *(2006.01)*
***A01N 51/00*** *(2006.01)* ***A01N 25/00*** *(2006.01)*
***A01P 3/00*** *(2006.01)* ***A01P 5/00*** *(2006.01)*
***A01P 7/02*** *(2006.01)* ***A01P 7/04*** *(2006.01)*

(86) International application number:
**PCT/EP2008/010697**

(87) International publication number:
**WO 2009/080247 (02.07.2009 Gazette 2009/27)**

## (54) PESTICIDAL COMPOUND MIXTURES COMPRISING CLOTHIANIDIN AND IPCONAZOLE

PESTIZIDE ZUSAMMENSETZUNGEN ENTHALTEND CLOTHIANIDIN UND IPCONAZOL

COMPOSITIONS PESTICIDES COMPRENANT CLOTHIANIDINE ET IPCONAZOLE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **20.12.2007 EP 07123840**

(43) Date of publication of application:
**29.12.2010 Bulletin 2010/52**

(73) Proprietor: **Bayer Intellectual Property GmbH**
**40789 Monheim am Rhein (DE)**

(72) Inventors:
- **ANDERSCH, Wolfram**
**51469 Berigsch Gladbach (DE)**
- **HUNGENBERG, Heike**
**40764 Langenfeld (DE)**
- **KROHN, Peter-Wilhelm**
**51373 Leverkusen (DE)**

(74) Representative: **BIP Patents**
**c/o Bayer Intellectual Property GmbH**
**Alfred-Nobel-Straße 10**
**40789 Monheim am Rhein (DE)**

(56) References cited:
**WO-A1-2006/069655** **WO-A1-2008/003738**
**WO-A2-99/63826** **WO-A2-2006/117192**
**WO-A2-2007/009775**

Remarks:
The file contains technical information submitted after the application was filed and not included in this specification

EP 2 265 122 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to novel active compound combinations comprising:

clothianidin (component A)
metalaxyl (component B)
ipconazole (component C)
which are highly suitable for controlling insects, acari, and nematodes and fungi.
Clothianidin of the formula (I)

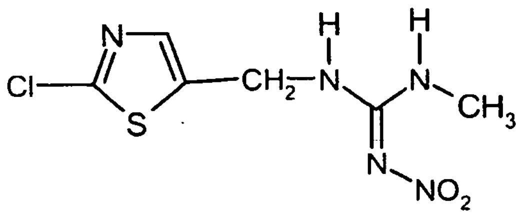

(I)

is known to have potent insecticidal activities (EP 0 375 907).
Ipconazole of formula (II), known from EP 0 329 397,

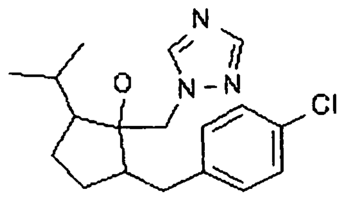

(II)

and metalaxyl of the formula (III), known from DE02515091,

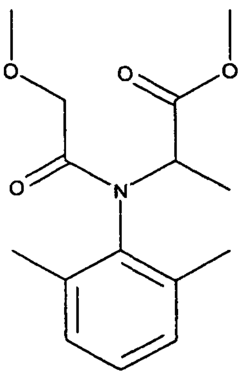

(III)

are known to have potent fungicidal activities.

Mixtures of clothianidin and metalaxyl as well as mixtures of clothianidin and various triazole fungicides are known from EP 1 085 810.

WO 2008/003738 A1, which is only relevant under Article 54(3) EPC, discloses a composition comprising clothianidin, ipconazole and N-(2-[3-chloro-5-(trifluoromethyl)-2-pyridinyl]ethyl]-2-trifluoromethylbenzamide which is effective against *Myzus persicae*.

The first object of this invention is the mixture comprising clothianidin and ipconazole, with the exception of a composition that further comprises N-(2-[3-chloro-5-(trifluoromethyl)-2-pyridinyl]ethyl]-2-trifluoromethylbenzamide, and in which the ratio of such compound, clothianidin, and ipconazole is 250 to 1 to 250.

The second object of this invention is the mixture comprising clothianidin, ipconazole, and metalaxyl.

Metalaxyl also comprises metalaxyl-M.

The activities of clothianidin, metalaxyl or ipconazole, as well as the combination of clothianidin and metalaxyl are in general good. However, especially at low application rates, and on certain pests they do not always satisfy the needs of agricultural practice where an economically efficient and ecologically safe pest control is still being sought.

Further demands on insecticidal compounds include the reduction of the dosage rate; a substantial broadening of the spectrum of pests that can be controlled, including resistant pests and fungi; increased safety in use; reduced phytotoxicity and thus better tolerance by plants; the control of pests in their different development stages; better behaviour during production of the insecticidal or/and fungicidal compounds, for example during grinding or mixing, during their storage or during their use; a very advantageous biocidal spectrum, even at low rates of concentration, while being well tolerated by warm-blooded organisms, fish and plants; and achievement of an additional effect, e.g. an algicidal, anthelmintic, ovicidal, bactericidal, molluscicidal, plant-activating, rodenticidal or virucidal action.

Further specific demands on compounds or compositions that have beneficial effects on the growth of plants or plant parts are inter alia lower application rates, improved formulation or application behaviour, increased yield, improved health of the plant, broader spectrum, higher reproducibility.

Further specific demands on insecticidal compounds or compositions to be used on plant propagation material include negligible phytotoxicity when applied to the plant propagation material, compatibility with soil conditions (e.g. concerning binding of the compound to the soil), systemic activity in the plant, no negative impact on germination, and efficacy during appropriate pest life cycle.

The objectives of the invention are to meet one or more of the demands mentioned above, such as the reduction of the dosage rate, a broadening of the spectrum of pests that can be controlled, including resistant pests, or the specific demands for the applicability on plant propagation material.

It has now been discovered that binary or ternary mixtures comprising

| | | |
|---|---|---|
| Either | as component A: | clothianidin, |
| | as component B: | ipconazole |
| Or | as component A: | clothianidin, |
| | as component B: | ipconazole |
| | as component C: | metalaxyl |

have unexpectedly high activities in the control of insects, acari, or nematodes, and fungi.

The present invention further relates to the use of these combinations for the treatment of plant propagation material, and to a method for protecting plant propagation material and/or shoots and foliage of a plant grown from plant propagation material from damage by an animal pest or a fungus, with the proviso that if the pest is *Myzus persicae,* the composition shall not further comprise N-(2-[3-chloro-5-(trifluoromethyl)-2-pyridinyl]ethyl]-2-trifluoromethylbenzamide, in which the ratio of such compound, clothianidin, and ipconazole is 250 to 1 to 250. Treated plant propagation material is also provided.

The synergistic action of the combination comprising clothianidin and ipconazole alone or ipconazole and metalaxyl according to the invention extends the insecticidal, nematicidal or acaricidal range of action of clothianidin and the fungicidal range of action of ipconazole and/or metalaxyl primarily by reducing the dosage rate and by broadening of the spectrum of pests that can be controlled. Thus, the combinations according to the invention still achieve a high degree of pest control even in cases where the individual compounds of the combination according to the invention do not show sufficient activity at the low application rates employed.

Further, the combinations according to the invention surprisingly display increased positive growth and health effects on plants and plant parts treated.

In addition to the synergistic effect described above, the combinations according to the invention may show further surprising advantages including increased safety in use; reduced phytotoxicity and thus better tolerance by plants; the control of pests in their different development stages; better behaviour during formulation of the insecticidal compounds, for example during grinding or mixing, during their storage or during their use; a very advantageous biocidal spectrum, even at low rates of concentration, while being well tolerated by warm-blooded organisms, fish and plants; and achievement of an additional effect, e.g. an algicidal, anthelmintic, avicidal, bactericidal, molluscicidal, nematicidal, plant-activating, rodenticidal or virucidal action.

It was further surprisingly found that the combinations according to the invention are particularly suited for the protection of seed and/or shoots and foliage of a plant grown from the seed from damage by pests or fungi. Thus, the combinations according to the invention show negligible phytotoxicity when applied to the plant propagation material, compatibility with soil conditions (e.g. concerning binding of the compound to the soil), systemic activity in the plant, no negative impact on germination, and efficacy during appropriate pest life cycle.

Throughout this document the expression "combination" stands for the various combinations of components

A), B), or C), for example in a single "ready-mix" form, in a combined spray mixture composed from separate formulations of the single active ingredient components, such as a "tank-mix", or in mixes that are coated on a seed either by direct mixing prior to seed treatment or by separate applications of the components onto the seed, whereby the mixing occurs in the seed or the plant grown from that seed.

The order of applying the components A), B), or C) is in general not essential for working the present invention.

The term "plant propagation material" is understood to denote generative parts of the plant, such as seeds, which can be used for the multiplication of the latter, and vegetative material, such as cuttings or tubers, for example potatoes. There may be mentioned for example seeds (in the strict sense), roots, fruits, tubers, bulbs, rhizomes and parts of plants. Germinated plants and young plants, which are to be transplanted after germination or after emergence from the soil, may also be mentioned. These young plants may be protected before transplantation by a total or partial treatment by immersion. Preferably "plant propagation material" is understood to denote seeds.

The combinations according to the invention can be applied for combating pests in agriculture, forestry, in the protection of storage and materials, and in hygiene applications.

Where the components according to the invention can be present in tautomeric form, such a compound is understood hereinabove and herein below also to include, where applicable, corresponding tautomeric forms, even when these are not specifically mentioned in each case.

The weight ratios of the active agents of the combination as well as the application rate depend on the kind and occurrence of the pests and fungi. Optimal weight ratios and application rates can be determined by test series for each use. In general, the weight ratio of component A) to the sum component B) and component C) is between 1000:1 and 1:100, preferred between 625:1 and 1:100, more preferred between 125:1 and 1:50, and most preferred between 25:1 and 1:5.

Further optimal weight ratios and application rates can be determined by test series for each use. In general, the weight ratio of component A) to the sum component B) and component C) is between 100:1 and 1:1000, preferred between 100:1 and 1:625, more preferred between 50:1 and 1:125, and most preferred between 5:1 and 1:25.

Further preferred mixing ratios for component A) to the sum of component B) and component C) are: from 100:1 to 1:6000, especially from 50:1 to 1:50, more especially in a ratio of from 20:1 to 1:20, even more especially from 10:1 to 1:10, very especially from 5:1 and 1:5, special preference being given to a ratio of from 2:1 to 1:2, and a ratio of from 1:4 to 1:2 being likewise preferred, above all in a ratio of 1:1, or 5:1, or 5:2, or 5:3, or 5:4, or 4:1, or 4:2, or 4:3, or 3:1, or 3:2, or 2:1, or 1:5, or 2:5, or 3:5, or 4:5, or 1:4, or 2:4, or 3:4, or 1:3, or 2:3, or 1:2, or 1:600, or 1:300, or 1:150, or 1:35, or 2:35, or 4:35, or 1:75, or 2:75, or 4:75, or 1:6000, or 1:3000, or 1:1500, or 1:350, or 2:350, or 4:350, or 1:750, or 2:750, or 4:750. Those mixing ratios are understood to include, on the one hand, ratios by weight and also, on other hand, molar ratios.

According to the invention all plants and plant parts can be treated. By plants is meant all plants and plant populations such as desirable and undesirable wild plants or cultigens (including naturally occurring cultigens). Cultigens can be plants obtained by conventional propagation and optimisation methods or by bioengineering and genetic engineering methods or by combinations of these methods, including transgenic plants and including plant varieties protectable or not protectable by plant varieties protective rights. By plant parts is meant all above ground and below ground parts and organs of plants such as shoot, leaf, blossom and root, whereby for example leaves, needles, stems, branches, blossoms, fruiting bodies, fruits and seed as well as roots, corms and rhizomes are listed. Crops and vegetative and generative propagating material, for example cuttings, corms, rhizomes, runners and seeds also belong to plant parts.

The especially advantageous action of the agents of the invention are emphasised in respect of the application for cereals, for example, wheat, oats, barley, spelt, triticale, and rye, but also maize, millet, rice, sugar cane, soy, sunflower, potatoes, cotton, rape, canola, tobacco, sugar beet, fodder beet, asparagus, hops as well as fruit plants (including rosaceous fruit, for example apples and pears, stone-fruits, for example peaches, nectarines, cherries, plums and apricots, citrus fruit, for example, oranges, grapefruit, limes, lemons, kumquats, mandarins and satsumas, nuts, for example pistachios, almonds, walnuts and pecan nuts, tropical fruits, for example, mango, papaya, pineapple, dates and bananas, and grapes) and vegetables (including leaf vegetables, for example endives, lambs lettuce, fennel, globe and loose-leaf salad, chard, spinach and chicory, brassicas, for example, cauliflower, broccoli, Chinese cabbage, kale (winter kale or curly kale), kohlrabi, brussel sprouts, red cabbage, white cabbage and savoy, fruiting vegetables, for example, aubergines, cucumbers, paprika, marrow, tomatoes, courgettes and sweetcorn, root vegetables, for example celeriac, turnip, carrots, swedes, radishes, horse radish, beetroot, salsify, celery, pulses, for example, peas and beans, and bulb vegetables, for example leeks and onions).

Preferred plants to work the invention on are: rice, cotton, tea, vegetables, sugar cane, soybean, potato, top fruits, corn, vine, ornamentals, rangeland and pastures, canola.

Particularly preferred plants to work the invention on are corn, soybean, cotton, rice and canola.

A very particularly preferred plant to work the invention on is corn.

The active compound combinations according to the invention have very good fungicidal properties and are suitable for controlling phytopathogenic fungi, such as Plasmodiophoromycetes, Oomycetes, Chytridiomycetes, Zygomycetes, Ascomycetes, Basidiomycetes, Deuteromycetes, etc.

The active compound combinations according to the invention are particularly suitable for controlling Erysiphe graminis, Pyrenophora teres and Leptosphaeria nodorum.

Some pathogens causing fungal diseases which come under the generic names listed above may be mentioned by way of example, but not by way of limitation:

Pythium species, such as, for example, *Pythium ultimum*; Phytophthora species, such as, for example, *Phytophthora infestans*; Pseudoperonospora species, such as, for example, *Pseudoperonospora humuli* or *Pseudoperonospora cubensis*; Plasmopara species, such as, for example, *Plasmopara viticola*; Bremia species, such as, for example, *Bremia lactucae*; Peronospora species, such as, for example, *Peronospora pisi* or *P. brassicae*; Erysiphe species, such as, for example, *Erysiphe graminis*; Sphaerotheca species, such as, for example, *Sphaerotheca fuliginea*; Podosphaera species, such as, for example, *Podosphaera leucotricha*; Venturia species, such as, for example, *Venturia inaequalis*; Pyrenophora species, such as, for example, *Pyrenophora teres* or *P. graminea* (conidia form: Drechslera, syn: Helminthosporium); Cochliobolus species, such as, for example, *Cochliobolus sativus* (conidia form: Drechslera, syn: Helminthosporium); Uromyces species, such as, for example, *Uromyces appendiculatus*; Puccinia species, such as, for example, *Puccinia recondita*; Sclerotinia species, such as, for example, *Sclerotinia sclerotiorum*; Tilletia species, such as, for example, *Tilletia caries;* Ustilago species, such as, for example, *Ustilago nuda* or *Ustilago avenae*; Pellicularia species, such as, for example, *Pellicularia sasakii*; Pyricularia species, such as, for example, *Pyricularia oryzae*; Fusarium species, such as, for example, *Fusarium culmorum*; Botrytis species, such as, for example, *Botrytis cinerea*; Septoria species, such as, for example, *Septoria nodorum;* Leptosphaeria species, such as, for example, *Leptosphaeria nodorum*; Cercospora species, such as, for example, *Cercospora canescens;* Alternaria species, such as, for example, *Alternaria brassicae;* Pseudocercosporella species, such as, for example, *Pseudocercosporella herpotrichoides,* Rhizoctonia species, such as, for example, *Rhizoctonia solani.*

The fact that the active compound combinations are well tolerated by plants at the concentrations required for controlling plant diseases permits a treatment of entire plants (above-ground parts of plants and roots), of propagation stock and seed, and of the soil. The active compound combinations according to the invention can be used for foliar application or else as seed dressings.

The fact that the active compounds which can be used are well tolerated by plants at the concentrations required for controlling plant diseases permits a treatment of the seed. Accordingly, the active compounds according to the invention can be used as seed dressings.

A large part of the damage to crop plants which is caused by phytopathogenic fungi occurs as early as when the seed is attacked during storage and after the seed is introduced into the soil, during and immediately after germination of the plants. This phase is particularly critical since the roots and shoots of the growing plant are particularly sensitive and even minor damage can lead to the death of the whole plant. Protecting the seed and the germinating plant by the use of suitable compositions is therefore of particularly great interest.

The control of phytopathogenic fungi which damage plants post-emergence is carried out primarily by treating the soil and the above-ground parts of plants with crop protection agents. Owing to the concerns regarding a possible impact of crop protection agents on the environment and the health of man and animals, there are efforts to reduce the amount of active compounds applied.

The control of phytopathogenic fungi by treating the seeds of plants has been known for a long time and is subject-matter of continuous improvements. However, the treatment of seed frequently entails a series of problems which cannot always be solved in a satisfactory manner. Thus, it is desirable to develop methods for protecting the seed and the germinating plant which dispense with the additional application of crop protection agents after sowing or after the emergence of the plants or where additional applications are at least reduced. It is furthermore desirable to optimize the amount of active compound employed in such a way as to provide maximum protection for the seed and the germinating plant from attack by phytopathogenic fungi, but without damaging the plant itself by the active compound employed. In particular, methods for the treatment of seed should also take into consideration the intrinsic fungicidal properties of transgenic plants in order to achieve optimum protection of the seed and the germinating plant with a minimum of crop protection agents being employed.

The present invention therefore in particular also relates to a method for the protection of seed and germinating plants from attack by phytopathogenic fungi, by treating the seed with a composition according to the invention.

The invention likewise relates to the use of the compositions according to the invention for the treatment of seed for protecting the seed and the germinating plant from phytopathogenic fungi.

Furthermore, the invention relates to seed which has been treated with a composition according to the invention so as to afford protection from phytopathogenic fungi.

The active compound combinations, having good plant compatibility and favourable homeotherm toxicity, are suitable for controlling animal pests, in particular insects, arachnids and nematodes, encountered in agriculture, in forests, in the protection of stored products and materials and in the hygiene sector. They are preferably used as crop protection compositions for foliar-, soil-, and seed treatment.

The active compound combinations according to this invention are effective against normally sensitive and resistant species and against all or individual stages of development. The abovementioned pests include:

From the order of the Isopoda, for example, Oniscus asellus, Armadillidium vulgare, Porcellio scaber. From the order of the Diplopoda, for example, Blaniulus guttulatus. From the order of the Chilopoda, for example, Geophilus carpophagus, Scutigera spp. From the order of the Symphyla, for example, Scutigerella immaculata. From the order of the Thysanura, for example, Lepisma saccharina. From the order of the Collembola, for example, Onychiurus armatus. From the order of the Orthoptera, for example, Acheta domesticus, Gryllotalpa spp., Locusta migratoria migratorioides, Melanoplus spp., Schistocerca gregaria. From the order of the Blattaria, for example, Blatta orientalis, Periplaneta americana, Leucophaea maderae, Blattella germanica. From the order of the Dermaptera, for example, Forficula auricularia. From the order of the Isoptera, for example, Reticulitermes spp. From the order of the Phthiraptera, for example, Pediculus humanus corporis, Haematopinus spp., Linognathus spp., Trichodectes spp., Damalinia spp. From the order of the Thysanoptera, for example, Hercinothrips femoralis, Thrips tabaci, Thrips palmi, Frankliniella occidentalis. From the order of the Heteroptcra, for example, Eurygaster spp., Dysdercus intermedius, Piesma quadrata, Cimex lectularius, Rhodnius prolixus, Triatoma spp. From the order of the Homoptera, for example, Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Phylloxera vastatrix, Pemphigus spp., Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp. From the order of the Lepidoptera, for example, Pectinophora gossypiella, Bupalus piniarius, Cheimatobia brumata, Lithocolletis blancardella, Hyponomeuta padella, Plutella xylostella, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Mamestra brassicae, Panolis flammea, Spodoptera spp., Trichoplusia ni, Carpocapsa pomonella, Pieris spp., Chilo spp., Pyrausta nubilalis, Ephestia kuehniella, Galleria mellonella, Tineola bisselliella. Tinea pellionella, Hofmannophila pseudospretella, Cacoecia podana, Capua reticulana, Choristoneura fumiferana, Clysia ambiguella, Homona magnanima, Tortrix viridana, Cnaphalocerus spp., Oulema oryzae. From the order of the Coleoptera, for example, Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica, Lissorhoptrus oryzophilus. From the order of the Hymenoptera, for example, Diprion spp., Hoplocampa spp., Lasius spp., Monomorium pharaonis, Vespa spp. From the order of the Diptera, for example, Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Biblio hortulanus, Oscinella frit, Phorbia spp., Pegomyia hyoscyami, Ceratitis capitata, Dacus oleae, Tipula paludosa, Hylemyia spp., Liriomyza spp. From the order of the Siphonaptera, for example, Xenopsylla cheopis, Ceratophyllus spp. From the order of the Arachnida, for example, Scorpio maurus, Latrodectus mactans, Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp., Hemitarsonemus spp., Brevipalpus spp.

The plant-parasitic nematodes include, for example, Pratylenchus spp., Radopholus similis, Ditylenchus dipsaci, Tylenchulus semipenetrans, Heterodera spp., Globodera spp., Meloidogyne spp., Aphelenchoides spp., Longidorus spp., Xiphinema spp., Trichodorus spp., Bursaphelenchus spp.

Very particulary preferred pests to work the invention on are: hoppers, thrips, aphids, white flies, bugs, termites and mole crickets

The treatment of plants and plant parts with the active compound combination is according to the invention carried out directly or by action on their environment, habitat or storage area by means of the normal treatment methods, e.g., by dipping, spraying, evaporation, misting, scattering, coating, and with propagation material, especially seeds, also by single or multiple coating.

Besides the treatment of plants or plant parts other than seeds, the combinations of the invention are particularly suitable for the treatment of seeds. A large part of the damage caused by pests and pathogens on cultigens occurs by infestation of the seed during storage and after sowing the seed in the ground as well as during and immediately after germination of the plants. This phase is especially critical since the roots and shoots of the growing plant are particularly sensitive and even a small amount of damage can lead to withering of the whole plant. There is therefore considerable interest in protecting the seed and the germinating plant by the use of suitable agents.

The control of pests and pathogens by treatment of the seeds of plants has been known for a considerable time and is the object of continuous improvement. However, there are a number of problems in the treatment of seed

that cannot always be satisfactorily solved. Therefore it is worthwhile to develop methods for the protection of seeds and germinating plants which makes the additional application of plant protection agents after seeding or after germination of the plants superfluous. It is further worthwhile to optimize the amount of the applied active material such that the seed and the germinating plants are protected against infestation by pests as best as possible without the plants themselves being damaged by the active compound applied. In particular, methods for the treatment seed should also take into account the intrinsic insecticidal and fungicidal properties of transgenic plants in order to achieve optimal protection of the seed and germinating plants with a minimal expenditure of plant protection agents.

The present invention relates therefore especially to a method for the protection of seed and germinating plants from infestation with pests and pathogens in that the seed is treated with a combination of the invention.

The invention comprises a procedure in which the seed is treated at the same time with components A, B, and optionally C. It further comprises a method in which the seed is treated with components A, B, and optionally C separately.

The invention also comprises a seed, which has been treated with the components A, B, and optionally C at the same time or separately. For the latter seed, the active ingredients can be applied in separate layers. These layers can optionally be separated by an additional layer that may or may not contain an active ingredient.

The time interval between the application of different layers of the style compounds is in general not critical.

In addition the invention relates also to the use of the combination of the invention for the treatment seed for protection of the seed and the germinating plants from pests. Furthermore the invention relates to seed which was treated with an agent of the invention for protection from pests.

One of the advantages of the invention is because of the special systemic properties of the agents of the invention treatment with these agents protects not only the seed itself from pests but also the plants emerging after sprouting. In this way the direct treatment of the culture at the time of sowing or shortly thereafter can be omitted.

It is also be regarded as advantageous that the combinations of the invention can also be used in particular with transgenic seeds whereby the plants emerging from this seed are capable of the expression of a protein directed against pests and pathogens. By treatment of such seed with the agents of the invention certain pests and pathogens can already be controlled by expression of the, for example, insecticidal protein, and it is additionally surprising that a synergistic activity supplementation occurs with the agents of the invention, which improves still further the effectiveness of the protection from pest and pathogen infestation.

The agents of the invention are suitable for the protection of seed of plant varieties of all types as already described which are used in agriculture, in greenhouses, in forestry, in garden construction or in vineyards. In particular, this concerns seed of maize, peanut, canola, rape, poppy, olive, coconut, cacao, soy cotton, beet, (e.g. sugar beet and feed beet), rice, millet, wheat, barley, oats, rye, sunflower, sugar cane or tobacco. The agents of the invention are also suitable for the treatment of the seed of fruit plants and vegetables as previously described. Particular importance is attached to the treatment of the seed of maize, soy, cotton, wheat and canola or rape. Thus, for example, the combination of number (1) is particularly suitable for the treatment of maize seed.

As already described, the treatment of transgenic seed with an agent of the invention is of particular importance. This concerns the seeds of plants which generally contain at least one heterologous gene that controls the expression of a polypeptide with special insecticidal properties. The heterologous gene in transgenic seed can originate from microorganisms such as Bacillus, Rhizobium, Pseudomonas, Serratia, Trichoderma, Clavibacter, Glomus or Gliocladium. The present invention is particularly suitable for the treatment of transgenic seed that contains at least one heterologous gene that originates from Bacillus sp. and whose gene product exhibits activity against the European corn borer and/or western corn rootworm. Particularly preferred is a heterologous gene that originates from Bacillus thuringiensis.

Within the context of the present invention the agent of the invention is applied to the seed alone or in a suitable formulation. Preferably the seed is handled in a state in which it is so stable, that no damage occurs during treatment. In general treatment of the seed can be carried out at any time between harvest and sowing. Normally seed is used that was separated from the plant and has been freed of spadix, husks, stalks, pods, wool or fruit flesh. Use of seed that was harvested, purified, and dried to moisture content of below 15 % w/w. Alternatively, seed treated with water after drying and then dried again can also be used.

In general care must be taken during the treatment of the seed that the amount of the agent of the invention and/or further additive applied to the seed is so chosen that the germination of the seed is not impaired and the emerging plant is not damaged. This is to be noted above all with active compounds which can show phytotoxic effects when applied in certain amounts.

The agents of the invention can be applied directly, that is without containing additional components and without being diluted. It is normally preferred to apply the agent to the seed in the form of a suitable formulation. Suitable formulations and methods for seed treatment are known to the person skilled in the art and are described, for example, in the following documents: US 4,272,417 A, US 4,245,432 A, US 4,808,430 A, US 5,876,739 A, US 2003/0176428 A1, WO 2002/080675 A1, WO 2002/028186 A2.

Compositions, which are especially useful for seed treatment, are e.g.:

A Soluble concentrates (SL, LS)

D Emulsions (EW, EO, ES)

E Suspensions (SC, OD, FS)

F Water-dispersible granules and water-soluble granules (WG, SG)

G Water-dispersible powders and water-soluble powders (WP, SP, WS)

H Gel-Formulations (GF)

I Dustable powders (DP, DS)

Conventional seed treatment formulations include for example flowable concentrates FS, solutions LS, powders for dry treatment DS, water dispersible powders for slurry treatment WS, water-soluble powders SS and emulsion ES and EC and gel formulation GF. These formulations can be applied to the seed diluted or undiluted. Application to the seeds is carried out before sowing, either directly on the seeds or after having pregerminated the latter. Preferred are FS formulations.

In the treatment of seed, the application rates of the inventive combination are generally from 0.1 to 10 kg per 100 kg of seed. The separate or joint application of the compounds I and II or of the combinations of the compounds I and II is carried out by spraying or dusting the seeds, the seedlings, the plants or the soils before or after sowing of the plants or before or after emergence of the plants.

The invention also relates to the propagation products of plants, and especially the seed comprising, that is, coated with and/or containing, a combination as defined above or a composition containing the combination of two or more active ingredients or a combination of two or more compositions each providing one of the active ingredients. The seed comprises the inventive combinations in an amount of from 0.1 g to 10 kg per 100 kg of seed.

The composition comprising a combination of pesticides 45 can be applied "neat",that is, without any diluting or additional components present. However, the composition is typically applied to the seeds in the form of a pesticide formulation. This formulation may contain one or more other desirable components including but not limited to 50 liquid diluents, binders to serve as a matrix for the pesticide, fillers for protecting the seeds during stress conditions, and plasticizers to improve flexibility, adhesion and/or spreadability of the coating. In addition, for oily pesticide formulations containing little or no filler, it may be desirable to add 55 to the formulation drying agents such as calcium carbonate, kaolin or bentonite clay, perlite, diatomaceous earth or any other adsorbent material. Use of such components in seed treatments is known in the art. See, e.g., U.S. Pat. No. 5,876,739. The skilled artisan can readily select desirable 60 components to use in the pesticide formulation depending on the seed type to be treated and the particular pesticide that is selected. In addition, readily available commercial formulations of known pesticides may be used, as demonstrated in the examples below.

The seeds may also be treated with one or more of the following ingredients: other pesticides, including compounds which act only below the ground; fungicides, such as captan, thiram, metalxyl, fhidioxonil, oxadixyl, and isomers of each of those materials, and the like; herbicides, including compounds selected from acetamides, triazines, dinitroanilines, glycerol ethers, pyridazinones, uracils, phenoxys, ureas, and benzoic acids; herbicidal safeners such as benzoxazine, benzhydryl derivatives, N,N-diallyl dichloroacetamide, various dihaloacyl, oxazolidinyl and thiazolidinyl compounds, ethanone, naphthalic anhydride compounds, and oxime derivatives; fertilizers; and biocontrol agents such as naturally-occurring or recombinant bacteria and fungi from the genera Rhizobium, Bacillus, Pseudomonas, Serratia, Trichoderma, Glomus, Gliocladium and mycorrhizal fungi. These ingredients may be added as a separate layer on the seed or alternatively may be added as part of the pesticide composition.

Preferably, the amount of the novel composition or other ingredients used in the seed treatment should not inhibit generation of the seed, or cause phytotoxic damage to the seed.

The composition of the present invention can be in the form of a suspension; emulsion; slurry of particles in an aqueous medium (e.g., water); wettable powder; wettable granules (dry flowable); and dry granules. If formulated as a suspension or slurry, the concentration of the active ingredient in the formulation is preferably about 0.5% to about 99% by weight (w/w), preferably 5-40%.

As mentioned above, other conventional inactive or inert ingredients can be incorporated into the formulation. Such inert ingredients include but are not limited to: conventional sticking agents, dispersing agents such as methylcellulose (Methocel A15LV or Methocel A15C, for example, serve as combined dispersant/sticking agents for use in seed treatments), polyvinyl alcohol (e.g., Elvanol 51-05), lecithin (e.g., Yelkinol P), polymeric dispersants (e.g., polyvinylpyrrolidone/vinyl acetate PVP/VA S-630), thickeners (e.g., clay thickeners such as Van Gel B to improve viscosity and

reduce settling of particle suspensions), emulsion stabilizers, surfactants, antifreeze compounds (e.g., urea), dyes, colorants, and the like. Further inert ingredients useful in the present invention can be found in McCutcheon's, vol. 1, "Emulsifiers and Detergents" MC Publishing Company, Glen Rock, N.J., U.S.A., 1996. Additional inert ingredients useful in the present invention can be found in McCutcheon's, vol.2, "FunctionalMaterials," MC Publishing Company, Glen Rock, N.J., U.S.A., 1996.

The pesticides, compositions of pesticide combinations, and formulations of the present invention can be applied to seeds by any standard seed treatment methodology, including but not limited to mixing in a container (e.g., a bottle or bag), mechanical application, tumbling, spraying, and immersion. Any conventional active or inert material can be used for contacting seeds with pesticides according to the present invention, such as conventional film-coating materials including but not limited to water-based film coating materials such as Sepiret (Seppic, Inc., Fairfield, N.J.) and Opacoat (Berwind Pharm. Services, Westpoint, Pa.).

*Seed coating:* The subject combination of pesticides can be applied to a seed as a component of a seed coating. Seed coating methods and compositions that are known in the art are useful when they are modified by the addition of one of the embodiments of the combination of pesticides of the present invention. Such coating methods and apparatus for their application arc disclosed in, for example, U.S. Pat. Nos. 5,918,413, 5,891,246, 5,554,445, 5,389,399, 5,107,787, 5,080,925, 4,759,945 and 4,465,017. Seed coating compositions are disclosed, for example, in U.S. Pat. Nos. 5,939,356, 5,882,713, 5,876,739, 5,849,320, 5,834,447, 5,791,084, 5,661,103, 5,622,003, 5,580,544, 5,328,942, 5,300,127, 4,735,015, 4,634,587, 4,383,391, 4,372,080, 4,339,456, 4,272,417 and 4,245,432, among others. Useful seed coatings contain one or more binders and at least one of the subject combinations of pesticides.

Useful seed coatings contain one or more binders and at least one of the subject combinations of pesticides.

Binders that are useful in the present invention preferably comprise an adhesive polymer that may be natural or synthetic and is without phytotoxic effect on the seed to be coated. The binder may be selected from polyvinyl acetates; polyvinyl acetate copolymers; polyvinyl alcohols; polyvinyl alcohol copolymers; celluloses, including ethylcelluloses, methylcelluloses, hydroxymethylcelluloses, hydroxypropy-lcelluloses and carboxymethylcellulose; polyvinylpyrohdones; polysaccharides, including starch, modified starch, dextrins, maltodextrins, alginate and chitosans; fats; oils; proteins, including gelatin and zeins; gum arabics; shellacs; vinylidene chloride and vinylidene chloride copolymers; calcium lignosulfonates; acrylic copolymers; polyvinylacrylates; polyethylene oxide; acrylamide polymers and copolymers; polyhydroxyethyl acrylate, mefhylacrylamide monomers; and polychloroprene.

It is preferred that the binder be selected so that it can serve as a matrix for the subject combination of pesticides. While the binders disclosed above may all be useful as a matrix, the specific binder will depend upon the properties of the combination of pesticides. The term "matrix", as used herein, means a continuous solid phase of one or more binder compounds throughout which is distributed as a discontinuous phase one or more of the subject combinations of pesticides. Optionally, a filler and/or other components can also be present in the matrix. The term matrix is to be understood to include what may be viewed as a matrix system, a reservoir system or a microencapsulated system. In general, a matrix system consists of a combination of pesticides of the present invention and filler uniformly dispersed within a polymer, while a reservoir system consists of a separate phase comprising the subject combination of pesticides, that is physically dispersed within a surrounding, rate-limiting, polymeric phase. Microencapsulation includes the coating of small particles or droplets of liquid, but also to dispersions in a solid matrix.

The amount of binder in the coating can vary, but will be in the range of about 0.01 to about 25% of the weight of the seed, more preferably from about 0.05 to about 15%, and even more preferably from about 0.1 % to about 10%.

As mentioned above, the matrix can optionally include a filler. The filler can be an absorbent or an inert filler, such as are known in the art, and may include woodflours, clays, activated carbon, sugars, diatomaceous earth, cereal flours, fine-grain inorganic solids, calcium carbonate, and the like. Clays and inorganic solids which may be used include calcium bentonite, kaolin, china clay, talc, perlite, mica, vermiculite, silicas, quartz powder, montmoriUonite and mixtures thereof. Sugars which may be useful include dextrin and maltodextrin. Cereal flours include wheat flour, oat flour and barley flour.

The filler is selected so that it will provide a proper microclimate for the seed, for example the filler is used to increase the loading rate of the active ingredients and to adjust the control-release of the active ingredients. The filler can aid in the production or process of coating the seed. The amount of filler can vary, but generally the weight of the filler components will be in the range of about 0.05 to about 75% of the seed weight, more preferably about 0.1 to about 50%, and even more preferably about 0.5% to 15%.

The pesticides that are useful in the coating are those combinations of pesticides that are described herein. The amount of pesticide that is included in the coating will vary depending upon the type of seed and the type of active ingredients, but the coating will contain an amount of the combination of pesticides that is pesticidally effective. When insects are the target pest, that amount will be an amount of the combination of insecticides that is insecticidally effective. As used herein, an insecticidally effective amount means that amount of insecticide that will kill insect pests in the larvae or pupal state of growth, or will consistently reduce or retard the amount of damage produced by insect pests. In general, the amount of pesticide in the coating will range from about 0.005 to about 50% of the weight of the seed. A more

preferred range for the pesticide is from about 0.01 to about 40%; more preferred is from about 0.05 to about 20%.

The exact amount of the combination of pesticides that is included in the coating is easily determined by one of skill in the art and will vary depending upon the size of the seed to be coated. The pesticides of the coating must not inhibit germination of the seed and should be efficacious in protecting the seed and/or the plant during that time in the target insect's life cycle in which it causes injury to the seed or plant. In general, the coating will be efficacious for approximately 0 to 120 days after sowing.

The coating is particularly effective in accommodating high pesticidal loads, as can be required to treat typically refractory pests, such as corn root worm, while at the same time preventing unacceptable phytotoxicity due to the increased pesticidal load.

Optionally, a plasticizer can be used in the coating formulation. Plasticizers are typically used to make the film that is formed by the coating layer more flexible, to improve adhesion and spreadability, and to improve the speed of processing. Improved film flexibility is important to minimize chipping, breakage or flaking during storage, handling or sowing processes. Many plasticizers may be used. However, useful plasticizers include polyethylene glycol, glycerol, butylbenzylphthalate, glycol benzoates and related compounds. The range of plasticizer in the coating layer will be in the range of from bout 0.1 to about 20% by weight.

When the combination of pesticides used in the coating is an oily type formulation and little or no filler is present, it may be useful to hasten the drying process by drying the formulation. This optional step may be accomplished by means will known in the art and can include the addition of calcium carbonate, kaolin or bentonite clay, perlite, diatomaceous earth, or any absorbent material that is added preferably concurrently with the pesticidal coating layer to absorb the oil or excess moisture. The amount of calcium carbonate or related compounds necessary to effectively provide a dry coating will be in the range of about 0.5 to about 10% of the weight of the seed.

The coatings formed with the combination of pesticides are capable of effecting a slow rate of release of the pesticide by diffusion or movement through the matrix to the surrounding medium.

The coating can be applied to almost any crop seed that is described herein, including cereals, vegetables, ornamentals and fruits.

In addition to the coating layer, the seed may be treated with one or more of the following ingredients: other pesticides including fungicides and herbicides; herbicidal safeners; fertilizers and/or biocontrol agents. These ingredients may be added as a separate layer or alternatively may be added in the pesticidal coating layer.

The pesticide formulation may be applied to the seeds using conventional coating techniques and machines, such as fluidized bed techniques, the roller mill method, rotostatic seed treaters, and drum coaters. Other methods, such as spouted beds may also be useful. The seeds may be presized 5 before coating. After coating, the seeds are typically dried and then transferred to a sizing machine for sizing. Such procedures are known in the art.

The pesticide-treated seeds may also be enveloped with a film overcoating to protect the pesticide coating. Such overcoatings are known in the art and may be applied using conventional fluidized bed and drum film coating techniques.

In another embodiment of the present invention, a pesticide can be introduced onto or into a seed by use of solid matrix priming. For example, a quantity of the pesticide can be mixed with a solid matrix material and then the seed can be placed into contact with the solid matrix material for a period to allow the pesticide to be introduced to the seed. The seed can then optionally be separated from the solid matrix material and stored or used, or the mixture of solid matrix material plus seed can be stored or planted directly. Solid matrix materials which are useful in the present invention include polyacrylamide, starch, clay, silica, alumina, soil, sand, polyurea, poly aery late, or any other material capable of absorbing or adsorbing the pesticide for a time and releasing that pesticide into or onto the seed. It is useful to make sure that the pesticide and the solid matrix material are compatible with each other. For example, the solid matrix material should be chosen so that it can release the pesticide at a reasonable rate, for example over a period of minutes, hours, or days.

The present invention further embodies inhibition as another method of treating seed with the pesticide. For example, plant seed can be combined for a period of time with a solution comprising from about 1% by weight to about 75% by weight of the pesticide in a solvent such as water. Preferably the concentration of the solution is from about 5% by weight to about 50% by weight, more preferably from about 10% by weight to about 25% by weight. During the period that the seed is combined with the solution, the seed takes up (imbibes) a portion of the pesticide. Optionally, the mixture of plant seed and solution can be agitated, for example by shaking, rolling, tumbling, or other means. After inhibition, the seed can be separated from the solution and optionally dried, for example by patting or air drying.

In yet another embodiment, a powdered pesticide can be mixed directly with seed. Optionally, a sticking agent can be used to adhere the powder to the seed surface. For example, a quantity of seed can be mixed with a sticking agent and optionally agitated to encourage uniform coating of the seed with the sticking agent. The seed coated with the sticking agent can then be mixed with the powdered pesticide. The mixture can be agitated, for example by tumbling, to encourage contact of the sticking agent with the powdered pesticide, thereby causing the powdered pesticide to stick to the seed.

The present invention also provides a seed that has been treated by the method described above. The treated seeds of the present invention can be used for the propagation of plants in the same manner as conventional treated seed. The treated seeds can be stored, handled, sowed and tilled in the same manner as any other pesticide treated seed. Appropriate safety measures should be taken to limit contact of the treated seed with humans, food or feed materials, water and birds and wild or domestic animals.

***Colby Formula***

The good insecticidal action of the active compound combinations according to the invention can be seen from the examples which follow. While the individual active compounds exhibit weaknesses with regard to the action, the combinations demonstrate an action which exceeds the simple summation of action.

Formula for the calculation of the kill rate of a combination of two or three active compounds

The expected activity for a given combination of two active compounds can be calculated (cf. COLBY, S.R.; "Calculating Synergistic and Antagonistic Responses of Herbicide Combinations", Weeds 15, pages 20-22, 1967):'

If

X = the kill rate, expressed in % of the untreated control, when employing active compound A at an application rate of m ppm or m g/ha,

Y = the kill rate, expressed in % of the untreated control, when employing active compound B at an application rate of n ppm or n g/ha,

Z = the kill rate, expressed in % of the untreated control, when employing active compound C at an application rate of r ppm or r g/ha,

$E_1$ = the kill rate, expressed in % of the untreated control, when employing active compounds A and B at application rates of m and n ppm or m and n g/ha,

$E_2$ = the kill rate, expressed in % of the untreated control, when employing active compounds A and B and C at application rates of m, n , and r ppm or m, n, and r g/ha,

then for a combination of two active ingredients

$$E_1 = X + Y - \frac{X \cdot Y}{100}$$

and for a combination of three active ingredients

$$E_2 = X + Y + Z - \frac{X \cdot Y + X \cdot Y + Y \cdot Z}{100} + \frac{X \cdot Y \cdot Z}{10000}$$

If the actual insecticidal kill rate is higher than the calculated one, the kill rates of the combination are super additive, i.e. a synergistic effect is present. In this case, the kill rate that is actually observed has to be higher than the value, calculated using the formula above, for the expected kill rate (E).

Example **A**

**Myzus persicae - test**

| | |
|---|---|
| Solvent: | 7 parts by weight of dimethylformamide |
| Emulsifier: | 2 parts by weight of alkylaryl polyglycolether |

To produce a suitable preparation of active compound, 1 part by weight of active compound is mixed with the stated amount of solvent and emulsifier, and the concentrate is diluted with emulsifier-containing water to the desired concentration.

Cabbage leaves (*Brassica oleracea)* which are heavily infested by the green peach aphid *(Myzus persicae*) are treated by being sprayed with the preparation of the active compound at the desired concentration.

After the specified period of time, the mortality in % is determined. 100 % means that all the aphids have been killed; 0 % means that none of the aphids have been killed.

According to the present application in this test e.g. the following combination shows a synergistic effect in comparison to the single compounds:

Table A: **Myzus persicae - Test**

| **Active Ingredient** | **Concentration in ppm** | **Mortality in % after 6$^d$** |
|---|---|---|
| **Ipconazole** | 200 | 10 |
| **Metalaxyl** | 200 | 0 |
| **Clothianidin** | 0,8 | 65 |
| **Ipconazole + Metalaxyl + Clothianidin (250 : 250 : 1)**<br>According to the invention | **200 + 200 + 0,8** | **obs.*** **95**   **cal.**** **67,5** |
| * obs. = observed insecticidal efficacy<br>** cal. = efficacy calculated with Colby-formula | | |

Example **B**

**Phaedon cochleariae - test** (**larvae**)

Solvent: 7 parts by weight of dimethylformamide
Emulsifier: 2 parts by weight of alkylaryl polyglycolether

To produce a suitable preparation of active compound, 1 part by weight of active compound is mixed with the stated amount of solvent and emulsifier, and the concentrate is diluted with emulsifier-containing water to the desired concentration.

Cabbage leaves (*Brassica oleracea*) are treated by being sprayed with the preparation of the active compound in the desired concentration and are infested with larvae of the mustard *beetle*(*Phaedon cochleariae*) as long as the leaves are still moist.

After the specified period of time, the mortality in % is determined. 100 % means that all the beetle larvae have been killed; 0 % means that none of the beetle larvae have been killed.

According to the present application in this test e.g. the following combination shows a synergistic effect in comparison to the single compounds:

Table B: **Phaedon cochleariae -** Test (larvae)

| **Active Ingredient** | **Concentration in ppm** | **Mortality in % after 6$^d$** |
|---|---|---|
| **Ipconazole** | 200 | 5 |
| **Clothianidin** | 4 | 55 |
| **Ipconazole + Clothianidin (50 : 1)**<br>According to the invention | **200 + 4** | **obs.*** **90**   **cal.**** **57,25** |
| * obs. = observed insecticidal efficacy<br>** cal. = efficacy calculated with Colby-formula | | |

## Claims

1. Composition comprising clothianidin and ipconazole, with the exception of a composition that further comprises N-(2-[3-chloro-5-(trifluoromethyl)-2-pyridinyl]ethyl]-2-trifluoromethylbenzamide, and in which the ratio of such compound, clothianidin, and ipconazole is 250 to 1 to 250.

2. Composition comprising clothianidin, ipconazole and metalaxyl.

3. Composition according to claim 1, wherein the ratio of clothianidin and ipconazole is between 100:1 and 1:1000.

4. Composition according to claim 2, wherein the ratio of clothianidin and the sum of ipconazole and metalaxyl is between 100:1 and 1:1000.

5. Use of the compositions according to claims 1 to 4 for the treatment of seed.

6. Use according to claim 5 wherein the seed is transgenic.

7. Method for protecting a seed and/or shoots and foliage of a plant grown from the seed from damage by an animal pest, the method comprising treating an unsown seed with a composition comprising either clothianidin and ipconazole or clothianidin, ipconazole, and metalaxyl, with the proviso that if the pest is myzus persicae, the composition shall not further comprise N-(2-[3-chloro-5-(trifluoromethyl)-2-pyridinyl]ethyl]-2-trifluoromethylbenzamide, in which the ratio of such compound, clothianidin, and ipconazole is 250 to 1 to 250.

8. Method according to claim 7, wherein clothianidin, ipconazole or metalaxyl are applied separately.

9. A seed that has been coated with a composition according to any of claims 1 to 4 or with the methods according to claims 7 or 8.

10. Seed according to claim 9 wherein the seed is a transgenic variety selected from corn, soybean, cotton, rice and canola.

## Patentansprüche

1. Zusammensetzung, die Clothianidin und Ipconazol umfasst, mit Ausnahme einer Zusammensetzung, die weiterhin N-(2-[3-Chlor-5-(trifluormethyl)-2-pyridinyl]ethyl-2-trifluormethylbenzamid umfasst, und in der das Verhältnis von solch einer Verbindung, Clothianidin und Ipconazol 250 zu 1 zu 250 beträgt.

2. Zusammensetzung, die Clothianidin, Ipconazol und Metalaxyl umfasst.

3. Zusammensetzung nach Anspruch 1, worin das Verhältnis von Clothianidin und Ipconazol zwischen 100:1 und 1:1000 beträgt.

4. Zusammensetzung nach Anspruch 2, worin das Verhältnis von Clothianidin und der Summe von Ipconazol und Metalaxyl zwischen 100:1 und 1:1000 beträgt.

5. Verwendung der Zusammensetzungen nach Ansprüchen 1 bis 4 für die Behandlung von Saatgut.

6. Verwendung nach Anspruch 5, wobei das Saatgut transgen ist.

7. Verfahren zum Schützen eines Samens und/oder von Sprossen und Blattwerk einer Pflanze, die aus dem Samen gewachsen ist, gegen Schädigung durch einen tierischen Schädling, wobei das Verfahren umfasst, dass man einen nicht ausgesäten Samen mit einer Zusammensetzung behandelt, die entweder Clothianidin und Ipconazol oder Clothianidin, Ipconazol und Metalaxyl umfasst, mit der Maßgabe, dass es, wenn es sich bei dem Schädling um Myzus persicae handelt, die Zusammensetzung nicht weiterhin N-(2-[3-Chlor-5-(trifluormethyl)-2-pyridinyl]ethyl-2-trifluormethylbenzamid umfasst, in der das Verhältnis von solch einer Verbindung, Clothianidin und Ipconazol 250 zu 1 zu 250 beträgt.

**8.** Verfahren nach Anspruch 7, wobei Clothianidin, Ipconazol oder Metalaxyl separat ausgebracht werden.

**9.** Samen, der mit einer Zusammensetzung nach einem der Ansprüche 1 bis 4 oder mit den Verfahren nach den Ansprüchen 7 oder 8 beschichtet worden ist.

**10.** Samen nach Anspruch 9, wobei der Samen eine transgene Sorte, ausgewählt aus Mais, Sojabohne, Baumwolle, Reis und Canola, ist.

**Revendications**

**1.** Composition comprenant de la clothianidine et de l'ipconazole, à l'exception d'une composition qui comprend en outre du N-(2-[3-chloro-5-(trifluoro-méthyl)-2-pyridinyl]éthyl]-2-trifluorométhylbenzamide, et dans laquelle le rapport d'un tel composé, de la clothianidine et de l'ipconazole va de 250 à 1 à 250.

**2.** Composition comprenant de la clothianidine, de l'ipconazole et du métalaxyle.

**3.** Composition selon la revendication 1, dans laquelle le rapport de la clothianidine et de l'ipconazole est compris entre 100:1 et 1:1000.

**4.** Composition selon la revendication 2, dans laquelle le rapport de la clothianidine et de la somme de l'ipconazole et du métalaxyle est compris entre 100:1 et 1:1000.

**5.** Utilisation des compositions selon les revendications 1 à 4, pour le traitement de semences.

**6.** Utilisation selon la revendication 5, dans laquelle la semence est transgénique.

**7.** Méthode de protection d'une semence et/ou de pousses et de feuillage d'une plante se développant à partir de la semence contre un endommagement par un animal nuisible, la méthode comprenant le traitement d'une semence non semée par une composition comprenant de la clothianidine et de l'ipconazole ou bien de la clothianidine, de l'ipconazole et du métalaxyle, à condition que si le nuisible est *Myzus persicae,* la composition ne comprenne pas en outre de N-(2-[3-chloro-5-(trifluorométhyl)-2-pyridinyl]éthyl]-2-trifluorométhylbenzamide, dans laquelle le rapport d'un tel composé, de la clothianidine et de l'ipconazole va de 250 à 1 à 250.

**8.** Méthode selon la revendication 7, dans laquelle la clothianidine, l'ipconazole et le métalaxyle sont appliqués séparément.

**9.** Semence ayant été revêtue d'une composition selon l'une quelconque des revendications 1 à 4, ou par les méthodes selon les revendications 7 ou 8.

**10.** Semence selon la revendication 9, **caractérisée en ce que** la semence est une variété transgénique choisie parmi le maïs, le soja, le coton, le riz et le canola.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0375907 A
- EP 0329397 A
- DE 02515091
- EP 1085810 A
- WO 2008003738 A1
- US 4272417 A
- US 4245432 A
- US 4808430 A
- US 5876739 A
- US 20030176428 A1
- WO 2002080675 A1
- WO 2002028186 A2
- US 5918413 A
- US 5891246 A
- US 5554445 A
- US 5389399 A
- US 5107787 A
- US 5080925 A
- US 4759945 A
- US 4465017 A
- US 5939356 A
- US 5882713 A
- US 5849320 A
- US 5834447 A
- US 5791084 A
- US 5661103 A
- US 5622003 A
- US 5580544 A
- US 5328942 A
- US 5300127 A
- US 4735015 A
- US 4634587 A
- US 4383391 A
- US 4372080 A
- US 4339456 A


### Non-patent literature cited in the description


- **MCCUTCHEON.** Emulsifiers and Detergents. MC Publishing Company, 1996, vol. 1
- **MCCUTCHEON.** FunctionalMaterials. MC Publishing Company, 1996, vol. 2
- **COLBY, S.R.** Calculating Synergistic and Antagonistic Responses of Herbicide Combinations. *Weeds,* 1967, vol. 15, 20-22